Europäisches Patentamt

European Patent Office

Office européen des brevets

(11) Publication number: **0 487 122 A2**

## EUROPEAN PATENT APPLICATION

(21) Application number: **91202841.2**

(22) Date of filing: **01.11.91**

(51) Int. Cl.5: **A21D 10/00**, A21D 8/04

(30) Priority: **21.11.90 GB 9025290**

(43) Date of publication of application:
**27.05.92 Bulletin 92/22**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

(71) Applicant: **UNILEVER PLC**
**Unilever House Blackfriars P.O. Box 68**
**London EC4P 4BO(GB)**
(84) **GB**

(72) Inventor: **Oole, Johannes Cornelis, UNILEVER**
**RESEARCH LAB.**
**Olivier van Noortlaan 120**
**NL-3133 AT Vlaardingen(NL)**
Inventor: **Steenhoek, Arie, UNILEVER**
**RESEARCH LAB.**
**Olivier van Noortlaan 120**
**NL-3133 AT Vlaardingen(NL)**

(74) Representative: **Hartong, Richard Leroy et al**
**Unilever N.V. Patent Division P.O. Box 137**
**NL-3130 AC Vlaardingen(NL)**

(54) **Fat-free pastry mix.**

(57) The invention is concerned with dry fat-free pastry mixtures; these mixtures comprise separately packed components, being

i) an egg white/sugar mix,

ii) a pregelatinizable starch;

iii) flour,

iv) optionally improvers like baking powder, enzymes or aerating agents.

Also the batters (chilled, frozen and ambient) are part of the invention.

A process for the preparation of the batters is disclosed. Baked products like pastries, cookies, sponge cakes and cakes can be made from these batters.

Until now, all pastry mixes known comprise a fatty component in order to achieve a pastry having the desired structure after baking.

However, for several years there has been a great demand for healthier products, by which is meant products containing less fat or no fat at all. A solution in order to come to compositions that are fat-free and simultaneously lead to the desired structure of the baked product and still have a good taste, has not been found so far.

We have now succeeded in preparing a dry fat-free pastry mixture with the desired properties.

Therefore, our invention is concerned in the first place with dry fat-free pastry mixtures that are characterized by separately packed components comprising:

i) an egg white/sugar mix, wherein the weight ratio of egg white (as fresh egg white) : sugar = 1:2-2:1;

ii) a mix of one or more pregelatinizable starches;

iii) flour,

wherein the amount of pregelatinizable starch in the total mix is $\frac{1}{2}$-$\frac{1}{4}$ of the amount of sugar present and the amount of flour is $\frac{1}{2}$-2 times the amount of sugar.

The egg white is preferably a dried egg white that is mixed with water before it is used in our process for the preparation of a batter from our mixes.

The components are packed separately. When a batter is required, the egg white is aerated in the presence of the sugar, the aerated egg white/sugar mix is mixed with a starch that has previously been gelatinized, optionally in the presence of flour, and the components are mixed together. During this mixing, the amount of shear should be such that good mixing is obtained while the air that is encapsulated in the components, is not liberated from the system.

The starch or flour component of our mix preferably contains some baking powder (up to 5 wt.%).

The starch that is used, can be derived from any source of starch, such as wheat, maize, rice, potato, tapioca. The starch can be unhydrolyzed, but also hydrolyzed starches (having DE values as low as 0.5) can be used.

Therefore, it is preferred that the starch component of the mixture contains a multiple purpose enzyme mixture. Suitable enzymes are enzymes capable of hydrolyzing carbohydrates. Examples of these enzymes are amylases, xylanases, pentosanases and arabinoxylases. However, also proteases can be used successfully. The best results are obtained when the enzyme mixtures display simultaneously amylase and xylanase activity. The amount of starch-based enzyme is 10-5,000 dpm for commercially available enzyme compositions. This amount is, of course, strongly dependent on the enzyme activity of the enzymic mixture.

In the mixes, preferably in the starch or flour component, also monoglyceride, monoglyceride hydrates, aerated monoglyceride hydrates, complexes of monoglyceride and starch or other aerating agents can be present. It is, however, also possible to add these components to the egg white/sugar mix. The monoglyceride part hereof is derived from saturated and/or unsaturated fatty acids having 12-20 C atoms.

Other aerating compounds that can be used are the well-known emulsifiers, such as calcium- or sodiumstearoyllactylate (CSL, SSL), DATA, Polyglycerolesters (PGE), Polysorbates (Tween, Span), Propyleenglycolmonostearate (PGM) etc. and mixtures of those.

The aeration of the egg white/sugar component is preferably performed to an overrun of 20-150%.

Part of the invention is also the batter, either at frozen, chilled or ambient temperature, which can be obtained from our mixes, while also the baked products which are obtainable by baking of our mixes, are part of the invention. Examples of baked products are short pastries, pastries, cookies, sponge cakes and cakes.

The process for the preparation of fat-free pastry batters is another part of our invention. This process comprises the following steps :

1) Whipping of a mixture of fresh egg white and sugar until an overrun of 20-150% is achieved;

2) Pregelatinizing starch in water, optionally in the presence of an enzyme mixture with hydrolyzing activity, in particular carbohydrate hydrolyzing activity;

3) Combining the aerated mixture of 1) with the pregelatinized starch of 2);

4) Adding flour to either the pregelatinized starch of 2) or to the mixture of 3);

5) Stirring of the mixture until a batter with the desired consistency has formed.

In this process also monoglyceride hydrates, aerated monoglyceride hydrates or other aerating agents or complexes of starch and monoglyceride hydrates can be added to the products of steps 1) and/or 2) and/or 3) and/or 4).

In these processes, the amounts of components used correspond, of course, with the amounts mentioned for the mixes **per se**.

The pregelatinization of the starches is performed by mixing 1 part by weight of starch with 7-15 parts by weight of water. The mixing is done at ambient temperature, although temperatures of 10-50°C can be used. If an enzyme is used, the enzyme can be mixed with the starches prior to the addition of water or the enzyme can be added to a freshly prepared mix of starch and water.

EXAMPLE I

300 g sugar and 300 g fresh egg white were aerated for 5 minutes in a Hobart mixer. 100 g starch is pregelatinized in 500 g water at ambient temperature. The aerated egg white/sugar mix is combined with the gelled starch and the mixture is aerated for another 5 minutes (Hobart). 300 g flour and 3 g baking powder were added to the mixture thus obtained, with mixing.

In this way, a batter was obtained. A cake was baked from this batter by baking at 160°C for 45 minutes.

A cake having a good cake structure and an acceptable taste was obtained.

EXAMPLE II

The basic recipe is:
400 g sugar
400 g eggwhite (fresh)
400 g flour
150 g gelatinised starch (100 g starch + 1000 g water)
4 g baking powder.

**Rice starch.**

Rice starch (100 g) was stirred into 70°C water (1000 g) to gelatinise. If enzymes are applied, it is done in this stage. This mass was cooled down to 20°C and mixed with the aerated sugar eggwhite mixture. Then the flour is carefully mixed in.

|  | A | B | C | D |
|---|---|---|---|---|
| Amylase (Fungamyl) | - | 0.05g | - | 0.05g |
| Xylanase | - | - | 0.05g | - |
| Protease | - | - | - | 0.07g |
| S.V. Batter ml/g | 1.49 | 1.51 | 1.51 | 1.56 |
| S.V. Cake ml/g | 2.0 | 2.0 | 2.0 | 2.1 |
| Texture | long | short | short | very short |
| Moistness | medium | high | high | med./high |

EXAMPLE III

**Potato starch.**

Procedure as with rice starch (ex II).

|  | A | B | C | D |
|---|---|---|---|---|
| Amylase (Fungamyl) | - | 0.05g | - | - |
| Xylanase | - | - | 0.05g | - |
| Protease | - | - | - | 0.07g |
| S.V. Batter ml/g | 1.49 | 1.49 | 1.40 | 1.46 |
| S.V. Cake ml/g | 2.0 | 2.2 | 2.2 | 2.0 |
| Texture | long | short/crumbly | short/crumbly | very short |
| Moistness | medium | high | high | high |

EXAMPLE IV

**Wheat starch.**

Procedure as with rice starch (ex II).

|  | A | B | C | D |
|---|---|---|---|---|
| Amylase (Fungamyl) | - | 0.05g | - | - |
| Xylanase | - | - | 0.05g | - |
| Protease | - | - | - | 0.07g |
| S.V. Batter ml/g | 1.42 | 1.46 | 1.82 | 1.24 |
| S.V. Cake ml/g | 2.0 | 2.2 | 2.4 | 1.8 |
| Texture | long | short | short | short |
| Moistness | medium | high | med./high | medium |

N.B. It will be clear that the amount of enzyme applied is related to its activity. The sample of amylase had an activity of 2500 SKB/g, the xylanase 200.000 U/g and the protease 4500 GU/g.

**Claims**

1. Dry fat-free pastry mixture, characterized by separately packed components comprising
   i) an egg white/sugar mix, wherein the weight ratio of egg white : sugar = 1:2-2:1;
   ii) a mix of one or more pregelatinizable starches;
   iii) flour,
   in such amounts that the amount of pregelatinizable starch in the total mix is $\frac{1}{2}$-$\frac{1}{4}$ of the amount of sugar, and the amount of flour in the total mix is $\frac{1}{2}$-2 times the amount of sugar.

2. Dry fat-free pastry mixture according to Claim 1, wherein the starch component also contains a multiple purpose enzyme mixture.

3. Dry fat-free pastry mixture according to Claim 2, wherein the enzyme mixture displays carbohydrate hydrolyzing activity.

4. Dry fat-free pastry mixture according to Claim 2 or 3, wherein the enzyme mixture displays at least one of the following activities : amylase activity, protease activity, xylanase activity, pentosanase activity and/or arabinoxylase activity.

5. Dry fat-free pastry mixture according to Claims 2-4, wherein the amount of enzyme is 10-5,000 dpm based on starch.

6. Dry fat-free pastry mixture according to Claim 1, wherein the starch or flour component also contains baking powder.

7. Dry fat-free pastry mixture according to Claims 1-6, wherein the pregelatinizable starch is derived from wheat, maize, rice, potato or tapioca.

8. Dry fat-free pastry mixture according to Claims 1-7, wherein the starch or flour component also contains monoglycerides, monoglyceride hydrates, aerated monoglyceride hydrates or complexes of monoglyceride and starch or other aerating agents.

9. Dry fat-free pastry mixture according to Claim 8, wherein the monoglyceride hydrate is derived from saturated and/or unsaturated fatty acids having 12-20 C atoms.

10. Fat-free pastry batter, characterized by the presence of the components of the mixture of Claims 1-9.

11. Fat-free pastry batter according to Claim 10, wherein the egg white/sugar component is aerated to an overrun of 20-150%.

4

**12.** Fat-free pastry batter according to Claim 10 or 11, wherein the batter is frozen or chilled.

**13.** Baked products, characterized in that these products are obtained after baking of the batters of Claims 10-12.

**14.** Baked products according to Claim 13, wherein these products comprise short pastries, pastries, cookies, sponge cakes or cakes.

**15.** Process for the preparation of a fat-free pastry batter, characterized by :
1) Whipping of a mixture of fresh egg white and sugar until an overrun of 20-150% is achieved;
2) Pregelatinizing starch in water, optionally in the presence of an enzyme mixture with hydrolyzing activity;
3) Combining the aerated mixture obtained in 1) with the pregelatinized starch of 2);
4) Adding flour to either the pregelatinized starch of 2) or to the mixture obtained in 3);
5) Stirring of the mixture until a batter with the desired consistency has formed.

**16.** Process according to Claim 15, wherein a monoglyceride, monoglyceride hydrate, an aerated monoglyceride hydrate or a complex of monoglyceride and starch or other aerating agent are added to either the product of 1) and/or 2) and/or 3) and/or 4.